## Europäisches Patentamt
## European Patent Office
## Office européen des brevets

(19)

(11) Veröffentlichungsnummer : **0 036 174**
**B1**

(12) # EUROPÄISCHE PATENTSCHRIFT

(45) Veröffentlichungstag der Patentschrift :
16.02.83

(51) Int. Cl.³ : **C 07 F 9/38**

(21) Anmeldenummer : **81101780.5**

(22) Anmeldetag : **11.03.81**

(54) Verfahren zur Herstellung von 2-Phenylethylen-phosphonsäure.

(30) Priorität : **19.03.80 DE 3010471**

(43) Veröffentlichungstag der Anmeldung :
**23.09.81 Patentblatt 81/38**

(45) Bekanntmachung des Hinweises auf die Patenterteilung : 16.02.83 Patentblatt 83/07

(84) Benannte Vertragsstaaten :
**AT BE CH DE FR GB IT LI LU NL SE**

(56) Entgegenhaltungen :
DD A 76 974
DE A 2 343 460
US A 3 763 122
JOURNAL OF THE AMERICAN CHEMICAL SOCIETY, Band 68, Dezember 1946 Seiten 2 540-1 GENNADY M. KOSLAPOFF et al. : « Addition Reactions in Phosphoorganic Syntheses. I. The Addition of Phosphorous Pentachloride to Olefins »

(73) Patentinhaber : **Henkel Kommanditgesellschaft auf Aktien**
**Postfach 1100 Henkelstrasse 67**
**D-4000 Düsseldorf 1 (DE)**

(72) Erfinder : **Meffert, Alfred, Dr.**
**Itterstrasse 33**
**D-4000 Düsseldorf 13 (DE)**
Erfinder : **Tesmann, Holger, Dr.**
**Vennstrasse 61**
**D-4000 Düsseldorf 12 (DE)**

# Verfahren zur Herstellung von 2-Phenylethylen-phosphonsäure

Gegenstand der Erfindung ist ein Verfahren zur Herstellung von 2-Phenyl-ethylen-phosphonsäure aus Styrol mit PCl₅.

Es ist bekannt, Styrol mit der doppelten molaren Menge an PCl₅ in Gegenwart eines inerten organischen Lösungsmittels, wie Benzol, umzusetzen und durch anschließende Hydrolyse in 2-Phenyl-ethylen-phosphonsäure zu überführen. Nach anschließender Umkristallisation aus Dibrommethan wurde die reine Säure in einer Gesamtausbeute von etwa 34 % gewonnen.

Es ist auch bekannt, 2-Phenyl-ethylen-phosphonsäure durch Chlorierung eines Gemisches aus Styrol und Phosphortrichlorid und anschließender Hydrolyse herzustellen.

Bei dieser Reaktion ist es jedoch unvermeidlich, daß sich ein großer Teil des eingesetzten Styrols infolge Bildung von Chlorierungsprodukten der Umsetzung zur Phosphonsäure entzieht.

Schließlich ist ein kontinuierliches Verfahren vorgeschlagen worden, bei dem 2-Phenyl-ethylen-phosphonsäure durch Umsetzung von Styrol mit doppelter molarer Menge an PCl₅ und anschließender Hydrolyse hergestellt wird, wobei als Lösungsmittel POCl₃ benutzt wird. Das Verfahren hat den Nachteil, daß erhebliche Mengen nicht nur an PCl₅ sondern auch an POCl₃ verwendet werden müssen.

Es wurde nun gefunden, daß man die bisherige Arbeitsweise noch verbessern kann, indem man die Herstellung von 2-Phenyl-ethylen-phosphonsäure durch Umsetzung von Styrol mit PCl₅ in Gegenwart eines inerten organischen Lösungsmittels und Hydrolyse des Reaktionsproduktes wie nachstehend beschrieben durchführt. Die neue Arbeitsweise ist dadurch gekennzeichnet, daß man Styrol und Phosphorpentachlorid im Molverhältnis von 1 : 1 in einem inerten organischen Lösungsmittel mit einem Siedepunkt über 70 °C bei Temperaturen von 60 bis 70 °C vermischt und unter Rühren bei dieser Temperatur beläßt bis eine klare Lösung sich bildet, danach im Vakuum das Lösungsmittel abtrennt, das Reaktionsprodukt in Wasser einleitet und bei Temperaturen nicht über 70 °C hydrolisiert und aus der danach abgekühlten Lösung zur Kristallisation bringt.

Geeignete inerte organische Lösungsmittel für die Durchführung des Verfahrens sind Benzol, Toluol, Chlorbenzol, Xylol oder Chlorkohlenwasserstoffe, soweit sie einen Siedepunkt oberhalb 70 °C aufweisen. Es hat sich weiterhin als zweckmäßig erwiesen, die Menge an organischem Lösungsmittel so zu bemessen, daß etwa 300 bis 600 ml auf 1 Mol PCl₅ entfallen.

Bei Einhaltung der genannten Bedingungen hat das beschriebene Verfahren den Vorteil, daß man in guten Ausbeuten 2-Phenyl-ethylen-phosphonsäure herstellen kann und dabei lediglich 1 Mol Phosphorpentachlorid pro Mol Styrol benötigt.

Die 2-Phenyl-ethylen-phosphonsäure kann als Sammler zur Gewinnung von Zinnstein durch Flotation mit guter Wirksamkeit eingesetzt werden.

Beispiel

In einem emaillierten Rührreaktor werden 18,5 kg Toluol und 20,8 kg PCl₅ vorgelegt und unter Rühren auf 60 °C erwärmt. Bei dieser Temperatur läßt man 10,4 kg Styrol, gelöst in 18,5 kg Toluol, zulaufen. Der Zulauf wird so gesteuert, daß die exotherme Reaktion die Reaktionstemperatur zwischen 60 und 70 °C einhält. Bei dieser Temperatur wird weiter gerührt, bis eine nahezu klare Lösung entsteht. Die Reaktionsdauer beträgt etwa 4 bis 5 Stunden. Das während dieser Zeit entstehende HCl-Gas wird über einen Absorptionsturm geleitet.

Das Toluol wird dann im Vakuum abdestilliert, wobei 70 °C Sumpftemperatur nicht überschritten wird. Zur Hydrolyse leitet man das Styrylphosphonsäuretetrachlorid in 64 kg Wasser ein, wobei die Temperatur so gehalten wird, daß sie 70 °C nicht übersteigt. Aus der abgekühlten Hydrolyse-Mischung fällt 2-Phenyl-ethylen-phosphonsäure als weißes, kristallines Produkt an. Es wird abfiltriert und bei 70 °C getrocknet. Die Rohausbeute beträgt 89 % (bezogen auf Styrol).

**Anspruch**

Verfahren zur Herstellung von 2-Phenyl-ethylen-phosphonsäure durch Umsetzung von Styrol mit PCl₅ in Gegenwart eines inerten organischen Lösungsmittels und Hydrolyse des Reaktionsproduktes, dadurch gekennzeichnet, daß man Styrol und Phosphorpentachlorid im Molverhältnis 1 : 1 in einem inerten organischen Lösungsmittel mit einem Siedepunkt über 70 °C bei Temperaturen von 60 bis 70 °C vermischt und unter Rühren bei dieser Temperatur beläßt bis eine klare Lösung sich bildet, danach im Vakuum das Lösungsmittel abdestilliert, das Reaktionsprodukt in Wasser einleitet und bei Temperaturen nicht über 70 °C hydrolisiert und aus der danach abgekühlten Lösung zur Kristallisation bringt.

**Claim**

A process for the production of 2-phenyl ethylene phosphonic acid by reacting styrene with PCl₅ in the presence of an inert organic solvent and hydrolysing the reaction product, characterised in that styrene and phosphorus pentachloride are mixed in a molar ratio of 1 : 1 at temperatures in the range from 60 to 70 °C in an inert organic solvent having a boiling point above 70 °C and the mixture stirred at that temperature until a clear solution is formed, after which the solvent is distilled off *in vacuo,* the reaction product is introduced into water and hydrolysed at temperatures not exceeding 70 °C and crystallised from the subsequently cooled solution.

**Revendication**

Procédé de préparation de l'acide phényl-2-éthylène phosphonique par réaction du styrène avec PCl$_5$ en présence d'un solvant organique inerte et hydrolyse du produit de réaction, caractérisé en ce que l'on mélange le styrène et le pentachlorure de phosphore dans un rapport molaire de 1 : 1, dans un solvant organique inerte dont le point d'ébullition est supérieur à 70 °C, à des températures de 60 à 70 °C, et on maintient sous agitation à cette température jusqu'à ce qu'il se forme une solution claire puis on distille le solvant sous vide, on coule le produit de réaction dans l'eau et on l'hydrolyse à des températures ne dépassant pas 70 °C puis on le fait cristalliser dans la solution après refroidissement.